# EUROPÄISCHE PATENTANMELDUNG

(11) **EP 0 989 006 A1**
(43) Veröffentlichungstag der Anmeldung: **29.03.2000**
(21) Anmeldenummer: 99116611.7
(22) Anmeldetag: 25.08.1999
(51) Int. Cl.: B60J 1/20

(54) **Elektromechanisch betätigtes Fensterrollo, besonders für Kraftfahrzeuge**

(30) Priorität: 26.08.1998 DE 19839078
(71) Anmelder: Köhler, Charlotte, 85229 Niederroth (DE)
(72) Erfinder: Köhler, Gisbert, Dipl.-Ing., 85229 Niederroth (DE)
(74) Vertreter: Tiedtke, Harro, Dipl.-Ing.

(57) **Zusammenfassung**

Ein Fensterrollo enthält eine in Aufwickelrichtung federnd vorgespannte Wickelwelle 4, die gemeinsam mit einer zu ihr parallelen Gewindespindel 5 und einem Antriebsmotor 6 in einem Rahmen 3 montiert ist. Auf der Gewindespindel 5 laufen Stellmuttern 8a und 8b, die mittels Hebeln 9a und 9b auf eine am Rollotuch 2 befestigte Zugleiste 10 so einwirken, daß das Rollotuch 2 motorisch betätigt auf- und abgerollt werden kann.

## Beschreibung

Die vorliegende Erfindung betrifft ein elektromechanisch betriebenes Fensterrollo insbesondere für Kraftfahrzeuge gemäß dem Oberbegriff des Anspruchs 1.

Derartige Rollos werden in Kraftfahrzeugen, bevorzugt an der Heckscheibe von Personenwagen, eingebaut, um Schutz vor Sonnenstrahlung aber auch einen Blendschutz bei Nachtfahrten zu ermöglichen. Aus Sicherheitsgründen ist es erforderlich, daß die Rollobewegung vom Fahrersitz aus zu steuern ist. Aus diesem Grunde sind im allgemeinen Elektromotoren für das Ein- und Ausfahren des Rollos vorgesehen, die per Knopfdruck vom Fahrer betätigt werden können.

Ein Fensterrollo dieser Gattung ist aus der DE 36 121 65 bekannt. Hier werden verschiedene Betätigungsmechanismen offenbart, bei denen vorzugsweise die Drehbewegung eines Motors in einer etwa unterhalb des Fenstermittelpunkts angeordneten Antriebseinheit (Getriebe) in eine translatorische Bewegung umgewandelt wird, welche dann über ein aus mehreren Hebeln bestehendes Betätigungssystem zum Bewegen des Rollotuches aus einer geöffneten Stellung in eine geschlossene Stellung und umgekehrt benützt wird.

In der EP 0 394 124 wird eine ähnliche Vorrichtung beschrieben, bei der von einem rotierenden Motor eine Zahnstange vorgeschoben wird, die an einem mit einem Zahnrad versehenen Lenker oder Auszieharm angreift, welcher das Rollotuch bewegt.

Eine andere Konstruktion beschreibt die EP 0 093 934. Hier wird an den beiden Seiten einer Rollobahn je ein Seilzug angeordnet, mit dem die Rollobahn gegen den Federzug der Wickelwelle angehoben wird.

Alle diese vorstehend beschriebenen Ausführungsformen erfüllen zwar die Grundfunktion des fernbedienbaren Öffnens und Schließens des Rollos, lassen aber viele Wünsche offen. So wird die Ausführung mit ständig verbleibenden, freiliegenden Seilzügen und Umlenkrollen an den Seiten des Rollos schon aus Gründen der Ästhetik aber auch auf Grund der hierdurch entstehenden Sichtbehinderung auf Ablehnung stoßen. Die Version mit Umwandlung der Drehbewegung in eine Linearbewegung durch Zahnräder und Zahnstange erfordert zur Vermeidung von unangenehmen Geräuschen im Fahrgastraum einen ungewöhnlich hohen Fertigungsaufwand. Auch ist der unter der Heckscheibe des Fahrzeugs angeordnete Motor und das Bauraum konsumierende Zahnstangengetriebe ein Fremdkörper, dessen gesamtes Bauvolumen an dieser zentralen Position besonders stört. Dieser Nachteil ist auch bei den Ausführungsformen mit Kurbelantrieb zur Umwandlung der Motordrehung in eine Längsbewegung gegeben. Störend ist hier zudem die Tatsache, daß der Kurbelantrieb in seinem Totpunkt keine Zugkraft entwickeln kann, das Gestänge sich aber innerhalb des Gelenkspiels bewegen kann. Hierdurch können störende Klappergeräusche entstehen.

Aus der G 295 06 213.4 ist schließlich eine motorenbetriebene Sonnenblende für ein Automobil bekannt geworden, welches die vorstehend genannten Nachteile überwinden soll. Für diese Sonnenblende ist nunmehr ein Spindelgetriebe vorgesehen, bestehend aus zwei axial zueinander angeordneten Spindeln mit gegenläufiger Schraubung. Die zwei Spindeln werden mittels eines Zahnrades stirnseitig zusammengehalten, das mit einem abtriebsseitigen Ritzel eines Elektromotors in Eingriff steht. Die Spindeln sind dabei parallel zu einer Rollo- oder Wickelwelle ausgerichtet und tragen jeweils eine Schraubenmutter, an die jeweils ein Auszieharm schwenkbar gelagert ist. Die äußeren Enden jedes Auszieharms sind an den sich gegenüberliegenden Enden einer Zugleiste anscharniert, an die eine freie Kante eines Rollotuchs angeklebt oder mittels eines Keters eingehängt ist.

Wird der Motor erregt, treibt dieser die beiden Spindeln an, wodurch die Schraubenmutter längs der Spindeln in entgegengesetzte Richtung bewegt werden. Hierdurch verschwenken die Auszieharme jeweils in ihren Anlenkpunkten an den Schraubenmuttern und der Zugleiste, wodurch diese von der Wickelwelle parallel beabstandet oder angenähert wird. Es hat sich bei dieser Konstruktion jedoch gezeigt, daß sich die zentrale Anordnung des Motors und des Zahnradgetriebes quasi zwischen den beiden Spindeln nachteilig auf das hintere Sichtfeld eines Fahrers auswirkt. Darüber hinaus entspricht jede Spindel und damit jeder Auszieharm der halben Breite des abzudeckenden Fensters. D.h. im Falle eines im wesentlichen quadratischen Fensters, kann dieses nur auf halbe Höhe abgedeckt werden, oder aber die Spindeln müssen das Fenster in Breitenrichtung des Fahrzeugs erheblich überragen. Letzteres führt wiederum zu einem unerwünschten Verbrauch an Einbauraum, der insbesondere bei Personenkraftwagen nur begrenzt zur Verfügung steht. Schließlich müssen die Spindeln, um eine ausreichende Öffnungs- und Schließgeschwindigkeit zu erhalten, eine große Steigung aufweisen. Dadurch muß die Spindel wiederum mit einem entsprechend höheren Drehmoment angetrieben werden, was ein größeres Getriebe erfordert. Alternativ wäre natürlich auch ein schneller drehender Motor oder ein geringer untersetzendes Übersetzungsgetriebe denkbar. Hierdurch müßte sich die Spindel mit hoher Drehzahl drehen, was zu Geräuschen und Schwingungen führt, wenn nicht ungewöhnlich hoher Bauaufwand getrieben wird. Beide Alternativen wirken sich also nachteilig auf die Baugröße aus, so daß bei dieser Konstruktion letztlich ein Kompromiß zwischen Betätigungsgeschwindigkeit, Betriebssicherheit und Baugröße eingegangen werden muß.

Angesichts dieser Sachlage ist es eine Aufgabe der Erfindung, ein gattungsgemäßes Fensterrollo bereit zu stellen, das trotz erhöhter Betätigungsgeschwindigkeit ein kleines Einbauvolumen aufweist.

Diese Aufgabe wird durch ein Fensterrollo mit den Merkmalen des Anspruchs 1 gelöst.

Das erfindungsgemäße elektromechanisch betätigte Fensterrollo für Kraftfahrzeuge hat demzufolge eine Wickelwelle, auf die ein Rollotuch aufgewickelt ist, dessen eine Kante an einer Zugleiste befestigt ist, deren Parallelabstand zur Wickelwelle mittels Auszieharmen veränderbar ist, die über einen Spindelantrieb verschwenkbar sind. Die Auszieharme sind an ortsfesten Anlenkpunkten vorzugsweise über ein Rollogehäuse (nachfolgend als Rollokassette bezeichnet) mit dem Kraftfahrzeug verbunden, um welche Auszieharme bei Betätigen des Spindelantriebs gedreht werden. Die Angriffspunkte des Spindelantriebs an den Auszieharmen (9a, 9b) sind ferner versetzt zu den vorstehend genannten Anlenkpunkten angeordnet, um eine Hebelwirkung zu erzeugen. Trotz der Verwendung des Spindelantriebs ist somit ein schnelles Aus- und Einfahren des Rollos möglich, ohne daß der Antriebsmotor oder das Getriebe vergrößert werden muß.

Erfindungsgemäß besteht das Fensterrollo dabei aus der Tuchbahn, deren eine Kante auf einer in Aufrollrichtung federnd vorgespannten Wickelwelle befestigt ist, während die andere Kante an der Zugleiste befestigt ist. Achsparallel zu der Wickelwelle ist eine Spindel angeordnet, wobei die Spindel an einem Ende ein Linksgewinde aufweist, an ihrem anderen Ende aber ein Rechtsgewinde. Die Spindel wird von einem Motor angetrieben, der sowohl in der Mitte der Spindel als auch an einem Ende angeordnet sein kann. Bevorzugt überträgt der Motor sein Drehmoment über ein die Drehzahl herabsetzendes Vorgelege z.B. mittels Zahnriemen oder kegeligen Zahnräder auf die Spindel.

In vorteilhafter Weise sind Wickelwelle, Spindel und Motor an dem gemeinsamen Gehäuse befestigt bzw., darin drehbar gelagert.

Auf den beide Gewindeenden der Spindel sind Stellmuttern aufgeschraubt, wobei das Gewindespiel so weit bemessen ist, daß ein leichter Lauf der Spindel gegeben ist. Die Stellmuttern tragen auf zwei Seiten senkrecht zur Spindelachse je einen Lagerzapfen. Diese Zapfen bilden das Schwenklager für die Auszieharme oder Hebel, die mit einem Ende mit diesen Zapfen formschlüssig verbunden sind, mit ihrem anderen Ende aber in Wirkverbindung mit der Zugleiste an der Rollobahn stehen.

Gemäß einer vorteilhaften Ausgestaltung sind die zwei Auszieharme zusätzlich am Gehäuse gelagert, wobei die Drehachsen dieser Lagerstellen etwa senkrecht zu einer Ebene stehen, die durch die vier Eckpunkte der Fensterscheibe definiert ist. Die Auszieharme tragen an ihrem längeren Armabschnitt eine Rolle oder ein Gleitstück, das an einer zur Schiene ausgebildeten Partie der Zugleiste gleiten bzw. daran abrollen kann. Die kürzeren Armabschnitte sind mit einer Langlochführung ausgestattet. In diese Langlochführung greifen die Lagerzapfen der Stellmutter ein. Die kürzeren Armabschnitte sind auch zweiteilig als Gabeln ausgebildet, die die Seitenflächen der Stellmuttern umschließen und so die Stellmuttern gegen Verdrehen schützen.

Wird nun die Spindel vom Motor in Drehung versetzt, so bewirkt die Vorschubbewegung der Stellmuttern über den Eingriff der Lagerzapfen im Langloch der kurzen Armabschnitte, daß die Auszieharme sich in ihren Drehachsen drehen und dabei - je nach Drehrichtung - über den längeren Armabschnitt und dessen Eingriff mit der Zugleiste eine Hebung oder Senkung der Zugleiste bewirken.

Aufgrund der unterschiedlichen Länge der beiden Armabschnitte müssen bei dieser Ausführung die Stellmuttern kürzere Wege auf der Spindel zurücklegen, als es dem Hubweg der Zugleiste mit dem Rollotuch entspricht. Dadurch kann die Spindel mit einer so kleinen Steigung ausgebildet werden, daß Selbsthemmung gegeben ist. Ohne weitere Sicherungsmaßnahmen kann daher der Motor in jeder Stellung des Rollos angehalten werden, ohne daß das Rollo seine Stellung verändern könnte.

Die Endstellungen der Rollobahn werden zweckmäßig durch mechanische Anschläge definiert. So kann die ausgefahrene Stellung dadurch begrenzt sein, daß die Stellmuttern auf der Spindel gegen Anschläge stoßen und die eingefahrene Stellung kann durch Anliegen der Zugleiste an einem Verkleidungsteil definiert sein.

Vorteilhaft ist es, wenn bei Erreichen dieser Anschläge die Stromaufnahme des Motors in an sich bekannter Weise überwacht wird und die Stromzufuhr beim Überschreiten einer definierten Stromstärke abgeschaltet wird. Wird der Motor nämlich beim Erreichen eines Anschlages abgebremst, so steigt seine Stromaufnahme auf ein Vielfaches des normalen Laufstroms an. Da dieser Anstieg der Stromaufnahme überwacht wird, kann das von einem Sensor erzeugte Ausgangssignal zur automatischen Abschaltung des Motors genutzt werden, wodurch eine Überlastung des Motors verhindert wird.

Gleichzeitig wird durch diese Steuerung bewirkt, daß der Motor im Moment des Abschaltens ein höheres Drehmoment als beim normalen Lauf entfaltet, mit dem Spindel, Mutter und Gestänge gegeneinander spielfrei verspannt werden. Hierdurch werden spielbedingte Klappergeräusche des Gestänges vermieden.

Die zum Antrieb von gattungsgemäßen Rollos üblicherweise eingesetzten Permanentmagnet-Motoren haben bei Drehzahl Null eine Stromaufnahme von meist mehr als dem dreifachen Betrag des normalen Laufstroms. Dementsprechend ist das Losbrechmoment des Motors mehr als dreimal so hoch, wie das Nennmoment des Motors.

Um zu bewirken, daß das Losbrechmoment des Motors sicher ausreicht, um einen durch Selbsthemmung im Gewinde der Spindel verspannten Antrieb wieder zu lösen, wird erfindungsgemäß die durch die Stromstärke gesteuerte Abschaltautomatik des Motors so eingestellt, daß eine Abschaltung bereits bei Erreichen des zweifachen Nennstromes bewirkt wird, während zum Anfahren die volle Stromstärke zur Verfügung steht.

Weitere vorteilhafte Ausgestaltungen der Erfindung sind Gegenstand der übrigen Unteransprüche.

Die Erfindung wird nachstehend anhand bevorzugter Ausführungsbeispiele unter Bezugnahme auf die begleitenden Zeichnungen näher erläutert.
Es zeigen:
- **Fig. 1**: in schematischer Darstellung eine Frontansicht eines Fensterrollos gemäß einem ersten bevorzugten Ausführungsbeispiel der Erfindung in eingebautem Zustand vor einem Heckfenster eines Kraftfahrzeugs, wobei die linke Hälfte von Fig. 1 die eingezogene und die rechte Hälfte von Fig. 1 die maximal ausgezogene Position des Rollotuchs zeigt,
- **Fig. 1a**: die Frontansicht einer zum ersten Ausführungsbeispiel alternativen Ausführungsform,
- **Fig. 2**: die Querschnittansicht durch den Antrieb des Rollos von Fig. 1 in etwa natürlichem Maßstab,
- **Fig. 3**: die Draufsicht eines Fensterrollos gemäß einem zweiten bevorzugten Ausführungsbeispiel der Erfindung,
- **Fig. 4**: die Querschnittansicht des Antriebs für das Fensterrollo gemäß Fig. 3,
- **Fig. 5**: die Querschnittansicht eines Fensterrollos gemäß einem dritten bevorzugten Ausführungsbeispiel der Erfindung,
- **Fig. 6**: die Teillängsschnittansicht eines Fensterrollos gemäß einem vierten bevorzugten Ausführungsbeispiel der Erfindung und
- **Fig. 7**: die Teillängsschnittansicht des Fensterrollos gemäß dem vierten bevorzugten Ausführungsbeispiel der Erfindung in Vergrößerung.

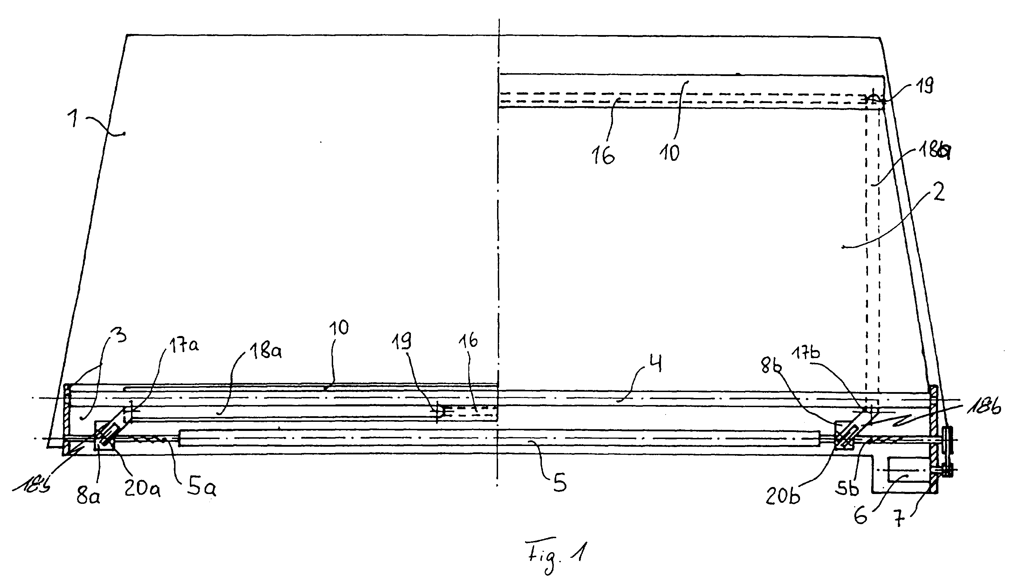

Die Fig. 1 zeigt das Heckfenster 1 eines Kraftfahrzeugs, vor dem ein Rollotuch 2 hochgehoben werden kann. In der linken Figurenhälfte ist das Rollo in eingefahrenem Zustand dargestellt, in der rechten Figurenhälfte in ausgefahrenem Zustand.

In einem Rahmen bzw. einer Rollokassette 3, welche das Gehäuse des erfindungsgemäßen Fensterrollos bildet, ist eine Wickelwelle 4 für das Rollotuch 2 endseitig drehbar gelagert und in Rotationsrichtung mittels einer nicht weiter gezeigten Spiralfeder vorgespannt. Hierfür weist die Wickelwelle 4 zwei stirnseitig vorstehende Lagerzapfen auf, die in Lagerbuchsen aufgenommen sind, welche an zwei sich gegenüberliegende Stirnplatten der Rollokassette 3 ausgebildet sind. Achsparallel zur Wickelwelle 4 ist eine Antriebsspindel 5 ebenfalls drehbar in der Rollokassette 3 in der vorstehend anhand der Wickelwelle 4 beschriebenen Weise gelagert. Diese Spindel 5 besteht im wesentlichen aus zwei Spindelabschnitten, wobei der eine Spindelabschnitt mit einem Rechtsgewinde 5a und der andere Spindelabschnitt mit einem Linksgewinde 5b versehen ist. Wie insbesondere aus der Fig. 1 zu entnehmen ist, sind das Rechts- und Linksgewinde nur an den jeweiligen Endabschnitten der Spindel 5 über eine bestimmte Achslänge hinweg ausgebildet.

Ein Elektromotor 6, der ebenfalls an der Rollokassette 3, vorzugsweise an einer der Stirnplatten befestigt ist, kann über ein Vorgelege 7 beispielsweise in Form eines Riemengetriebes die Spindel 5 in Drehung versetzen. Die vorstehend beschriebene Anordnung des Motors 6 an der Rollokassette 3 ist gemäß diesem Ausführungsbeispiel demzufolge nicht mittig sondern endseitig an der einen Stirnplatte, wobei der Motor 6 innerhalb der Kassette 3 angeordnet und seine Abtriebswelle durch ein Loch in der einen Stirnplatte nach außen geführt ist. Die Spindel 5 bzw. deren einer Lagerzapfen ist an dieser Endplatte ebenfalls aus der Rollokassette 3 geführt, wobei auf dem nach außen ragenden Lagerzapfenstumpf eine Riemenscheibe befestigt ist, die über einen Riemen mit der Abtriebswelle des Motors 6 wirkverbunden ist. Das Vorgelege 7 ist demzufolge außerhalb der Rollokassette 3 angeordnet und daher von außen beispielsweise für den Austausch des Riemens leicht zugänglich. Das Vorgelege 7 kann zudem mittels einer leicht entfernbaren Kunststoffkappe verdeckt sein.

Auf den beiden Gewindeabschnitten 5a, 5b der Spindel 5 laufen je eine Steilmutter 8a, 8b. An jeder Stellmutter 8a, 8b ist ein Lenker bzw. ein Auszieharm 9a, 9b drehbar gelagert, wobei die Drehachse dieser Drehlagerung bzw. Gelenks senkrecht zur Achse der Spindel 5 und auch etwa senkrecht zu einer Ebene steht, die durch die vier Eckpunkte der Fensterscheibe 1 definiert ist. In der Fig. 2 ist die Anlenkung eines der Auszieharme 9a, 9b an der zugehörigen Stellmutter 8a, 8b sowie an der Rollokassette 3 detaillierter dargestellt.

Demzufolge besteht jeder Auszieharm 9a, 9b aus einem langen Armabschnitt 18a und einem kurzen Armabschnitt oder Hebel 18b, welcher gemäß der Fig. 1 in Richtung auf die Spindelmitte bezüglich des langen Armabschnitts 18a abgekräpft ist. Der kurze Armabschnitt 18b bildet ferner eine Art U-förmige Gabel mit zwei Gabelschenkeln, welche die jeweilige Stellmutter 8a, 8b gleitfähig umgreifen. An den Endabschnitten jedes Gabelschenkels ist ein vorzugsweise nach unten offenes Langloch 21a, 21b ausgeformt, in welche Lagerzapfen 20a, 20b eingreifen, die an den Steilmuttern 8a, 8b ausgebildet oder angeschweißt sind. Die Lagerzapfen 20a, 20b sowie die Langlöcher 21a, 21b erlauben somit ein Verschwenken der Auszieharme 9a, 9b an den Stellmuttern 8a, 8b bei gleichzeitigem Verschieben der Lagerzapfen 20a, 20b längs der Langlöcher 21a, 21b. Gemäß der Fig. 2 bilden die Stellmuttern 8a, 8b langgestreckte seitliche Gleitflächen, die mit den Gabelschenkeln der kurzen Armabschnitte 18b in Gleitkontakt sind, wodurch bei ausreichender Verdrehsicherung der Stellmuttern 8a, 8b ein Verkanten oder Verklemmen der Stellmuttern 8a, 8b zwischen den Gabelschenkeln verhindert wird.

Ferner sind an der Rollokassette 3 Anlenksockel 3a, 3b ausgebildet, in die jeweils ein Lagerstift oder -zapfen 17a, 17b eingesetzt ist. Jeder Lagerstift 17a, 17b ist dabei in einem vorbestimmten Abstand zur Spindel 5 angeordnet, etwa im Übergangsbereich zwischen dem langen und kurzen Armabschnitt 18a, 18b jedes Auszieharms 9a, 9 und greift in ein im Übergangsbereich entsprechend ausgebildetes Halteloch des zugehörigen Auszieharms 9a, 9b ein. Um ein Abfallen der Auszieharme 9a, 9b von den Lagerstiften 17a, 17b zu verhindern, sind zusätzlich Sicherungsringe auf die Lagerstifte 17a, 17b aufgesetzt, welche die Auszieharme 9a, 9b zwischen sich und den Anlenksockeln 3a, 3b mit Spiel einklemmen.

Die Lagerstifte 17a, 17b bilden somit einen bezüglich der Rollokassette 3 und damit der Fahrzeugkarosserie ortsfesten Schwenkpunkt für die Auszieharme 9a, 9b mit vorbestimmten Hebelverhältnissen zwischen kurzen und langen Armabschnitten 18a, 18b. Bezüglich einer horizontalen Ebene sind die Lagerstifte 17a, 17b zudem schräg ausgerichtet und bestimmen so den Ausziehwinkel des Rollotuchs 2 bezüglich der horizontalen Ebene.

Die freien äußeren Enden der Auszieharme 9a, 9b sind gemäß dem ersten Ausführungsbeispiel jeweils in einer gemeinsamen Zugleiste 10 drehbar und längsverschiebbar gelagert, an der ein äußerer Rand des auf die Wickelwelle 4 aufgewickelten Rollotuchs 2 befestigt ist. Die Zugleiste 10 ist hierfür parallel zur Wickelwelle 4 ausgerichtet und mit einer Führungsbahn in Form einer schwalbenschwanz-artigen Nut 16 oder eines gleichwirkend geformten Vorsprungs ausgebildet. An den freien Enden der Auszieharme 9a, 9b sind entsprechend geformte Läufer oder Rollen 19 angelenkt, die zudem ein Verschwenken der Auszieharme 9a, 9b an der Führungsbahn ermöglichen.

Gemäß der Fig. 1a ist lediglich eine Führungsbahn vorgesehen, in welcher beide Auszieharme 9a, 9b bzw. deren Läufer 19 gelagert sind. Alternativ hierzu kann jedoch die Führungsbahn auch zweigeteilt sind, wie dies in der Fig. 1b dargestellt ist, wobei sich die beiden axial zueinander ausgerichteten Führungsbahnen in einem Mittenabschnitt unter Ausbildung einer Nockenbahn bereichsweise überlappen. Ebenso können in der Zugleiste zwei parallele Führungsbahnen ausgebildet sein. Letzere Alternative hat den Vorteil, daß die Auszieharme 9a, 9b, d.h. deren lange Armabschnitte 18a sich nahezu über die gesamte Länge der Rollokasette 3 erstrecken können, ohne sich gegenseitig zu beeinflussen und somit eine maximale Ausziehlänge des Rollos ermöglicht wird.

Das Fensterrollo gemäß dem vorstehenden Aufbau einschließlich der alternativen Gestaltung gemäß der Fig. 1a hat die folgende Funktionsweise.

In eingefahrenem Zustand des Rollos 2 befinden sich die Stellmuttern 20a, 20b gemäß der Fig. 1 und 1a an den äußeren Enden der Spindel 5, wobei sich die langen Armabschnitte 18a der Auszieharme 9a, 9b infolge der Kröpfung zwischen den langen und kurzen Armabschnitten 18a, 18b im wesentlichen parallel zur Spindel 5 ausrichten. Wie aus der Fig. 2 gut zu entnehmen ist, ist die Zugleiste 10 der Gestalt, daß sie in eingefahrenem Zustand die Rollokassette 3 im Bereich von deren Ausschwenkschlitz für die Auszieharme 9a, 9b wie einen Deckel abdeckt, wodurch eine kompaktes, geschlossenes äußeres Erscheinungsbild der Rollokassette 3 erzeugt wird.

Um nunmehr das Rollo 2 auszufahren, wird der elektrische Motor 6 vorzugsweise vom Fahrer per Fernbedienung betätigt, worauf er über das Vorgelege 7 die Spindel 5 antreibt. Die Drehbewegung der Spindel 5 bewirkt eine Translationsbewegung der Stellmuttern 8a, 8b in jeweils entgegengesetzte Richtungen, wobei die kurzen Armabschnitte 18b der Auszieharme 9a, 9b von den an den Stellmuttern 8a, 8b ausgebildeten Lagerzapfen 20a, 20b mitgenommen werden. Hierdurch werden die Auszieharme 9a, 9b um die ortsfesten Lagerstifte 17a, 17b verschwenkt, wobei die Lagerzapfen 20a, 20b der Stellmuttern 8a, 8b zwecks Längenausgleich entlang der Langlöcher 21a, 21b in den kurzen Armabschnitten 18b gleiten.

Gleichzeitig werden durch die Schwenkbewegung der Auszieharme 9a, 9b die endseitigen Läufer 19 in der Führungsbahn oder Bahnen 16 in Richtung zu den Enden der Zugleiste 10 verschoben, wobei die Zugleiste 10 von der Wickelrolle 4 beabstandet wird und dabei das Rollotuch 2 abwickelt. Durch die ortsfeste Anlenkung der Auszieharme 9a, 9b sowie die hierdurch erzeugten Hebelverhältnisse kann eine große Winkelgeschwindigkeit für die Auszieharme 9a, 9b erzeugt werden, ohne daß der Motor 6 schneller drehen oder eine Spindel 5 mit größerer Steigung gewählt werden müßte. Ein schnelles Ausfahren des Rollotuchs 2 ist damit gewährleistet. Da die ortsfeste Anlenkung der Auszieharme 9a, 9b an den Endabschnitten der Spindel 5, d.h. im stirnseitigen Bereich der Rollokassette 3 erfolgt, wird hierdurch das rückwärtige Blickfeld nicht eingeschränkt.

Um das Rollotuch 2 wieder einzufahren, erfolgt der vorstehende Bewegungsablauf entgegengesetzt, wobei das Aufwickeln des Rollotuchs 2 durch die Federvorspannung der Wickelwelle 4 bewerkstelligt wird.

Wie aus den Fig. 1 und 2 zu entnehmen ist, ist der Schwenkpunkt der Auszieharme 9a, 9b im Bereich zwischen dem kurzen und langen Armabschnitt 18a, 18b angeordnet. Die hierdurch sich ergebenden Hebelverhältnisse erlauben, wie bereits beschrieben, das schnelle Aus- und Einfahren des Rollotuchs 2. Die dabei auftretenden Kräfte auf die Lagerstifte 17a, 17b können jedoch durch die Ausbildung der massiven Anlenksockel 3a, 3b leicht in die Rollokassette 3 abgeleitet werden, so daß keine vermeintlich zu erwartenden statischen Probleme bei dieser Lösung auftauchen. Alternativ zu dieser Konstruktion ist es natürlich auch möglich, die Anlenkstellen der Auszieharme 9a, 9b hinter die Spindel 5 bei nahezu gleichen Hebelverhältnissen zu verlegen.

Die Fig. 3 und 4 zeigen ein zweites bevorzugtes Ausführungsbeispiel der Erfindung, wobei nachfolgend lediglich auf die zum ersten Ausführungsbeispiel unterschiedlichen Merkmale im wesentlichen eingegangen wird.

Die Fig. 3 zeigt die Draufsicht eines Endabschnitts des erfindungsgemäßen Fensterrollos samt dem einen Auszieharm 9a. Wie im ersten Ausführungsbeispiel ist auch im zweiten Ausführungsbeispiel der Antriebsmotor 6 seitlich, vorzugsweise an der einen Seitenplatte der Rollokassette 3 montiert und somit im wesentlichen außerhalb des rückwärtigen Blickfelds durch die Heckscheibe eines Kraftfahrzeugs angeordnet. In diesem Fall wird das Vorgelege 7 ebenfalls durch ein Riemengetriebe gebildet, welches die Drehzahl des Motors 6 auf eine geeignete Drehzahl der Spindel 5 untersetzt. Die Spindel 5 selbst hat im wesentlichen den gleichen Aufbau wie die des ersten Ausführungsbeispiels, ist jedoch über ein Kugellager in der Rollokassette 3 gelagert.

Gemäß der Fig. 3 besteht jeder Auszieharm 9a, 9b aus einem kurzen Armabschnitt 18b, der an ein langes Armunterteil 18a unter Ausbildung eines spitzen Winkels angeschlossen und somit in Richtung Spindelmitte gekröpft ist. Das freie Ende des langen Armunterteils 18a bildet ein Scharnier 29, an welches ein langes Armoberteil 18c angelenkt ist. Das Scharnier 29 ist dabei der Gestalt, daß das Armunter- und -oberteil 18a, 18c in eine enge Parallellage zusammenklappbar sind.

Auf den einen dargestellten Gewindeabschnitt 5a der Spindel 5 ist eine Stellmutter 8a aufgedreht, an der sich zwei Lagerzapfen 20a ausbilden, welche jeweils von einer Gleitbüchse 22a vorzugsweise aus Kunststoff oder Messing umgeben sind. Diese Lagerzapfen 20a sind in zwei sich gegenüberliegende, die Stellmutter 8a zwischen sich aufnehmende Führungsschienen 23a gleitgelagert, welche wiederum an der Rollokassette 3 fixiert sind. Die gezeigte Stellmutter 8a wird ferner von einer im wesentlichen rechteckigen Hülse 24 umgeben, deren Seitenwände sich zwischen die Stellmutter 8a und die Führungsschienen 23a gleitfähig zwischenfügen und die jeweils Langlöcher 21a aufweisen, durch welche die Lagerzapfen 20a in Richtung Führungsschienen 23a ragen.

Der ortsfeste Schwenkpunkt des dargestellten Auszieharms 9a befindet sich wie beim ersten Ausführungsbeispiel im Übergangsbereich des kurzen Armabschnitts 18b zum langen Armunterteil 18a und wird von einem in einem Anlenksockel 3a eingesetzten Lagerstift 17a gebildet, auf den der Auszieharm 9a drehbar aufgesteckt und per Sicherungsring axial fixiert ist.

Da der Auszieharm 9a gemäß dem zweiten Ausführungsbeispiel das zusätzliche Drehgelenk 29 enthält, kann das freie Ende des langen Armoberteils 18c einfach an die Zugleiste 10 mittels eines Stifts 25 anscharniert werden. An dieser Stelle bleibt noch darauf hinzuweisen, daß der Aufbau des zweiten, nicht gezeigten Auszieharms funktionell identisch aber spiegelverkehrt ist und daher nicht erneut beschrieben werden muß.

Die Funktionsweise des Fensterrollos gemäß dem zweiten Ausführungsbeispiel entspricht in etwa der des ersten Ausführungsbeispiels, wobei durch die Zweiteilung des langen Armabschnitts in das Ober- und Unterteil 18a, 18c eine maximale Ausziehlänge für das Rollotuch 2 erzielbar ist. Darüber hinaus hat es sich gezeigt, daß das Entlanggleiten der Lagerzapfen 20a der Stellmutter 8a in den ortsfesten Führungsschienen 23a nur wenig anfällig gegen Verklemmen ist, wobei diese Eigenschaft durch die Anordnung der Gleitbüchsen 22a um die Lagerzapfen 20a noch verbessert wird. Durch die geschlossene Form der die Spindel 5 umgebenden Hülse 24, welche Teil des kurzen Armabschnitts 18b ist, wird diese gegenüber der Gabelform gemäß dem ersten Ausführungsbeispiel wesentlich steifer und widerstandsfähiger gegen ein Aufspreizen, so daß die gesamte Vorrichtung wesentlich exakter und spielfreier läuft und damit geringere Klappergeräusche verursacht.

Beim Ausfahren des Rollotuchs 2 werden die die Armober- und -unterteile 18a, 18c verbindenden Scharniere nach außen gedrückt, wobei die freien Enden der Armoberteile 18c an den Lagerstiften 25 der Zugleiste 10 schwenken. Hierdurch wird die Zugleiste 10 von der Wickelwelle 4 parallel beabstandet und das Rollotuch 2 ausgezogen. Auch im zweiten Ausführungsbeispiel gewährleistet die ortsfeste Anlenkung der Auszieharme 9a, 9b und der damit erzielbaren Hebelverhältnisse auch bei Verwendung des Spindelantriebs ein schnelles Öffnen und Schließen des Rollos 2.

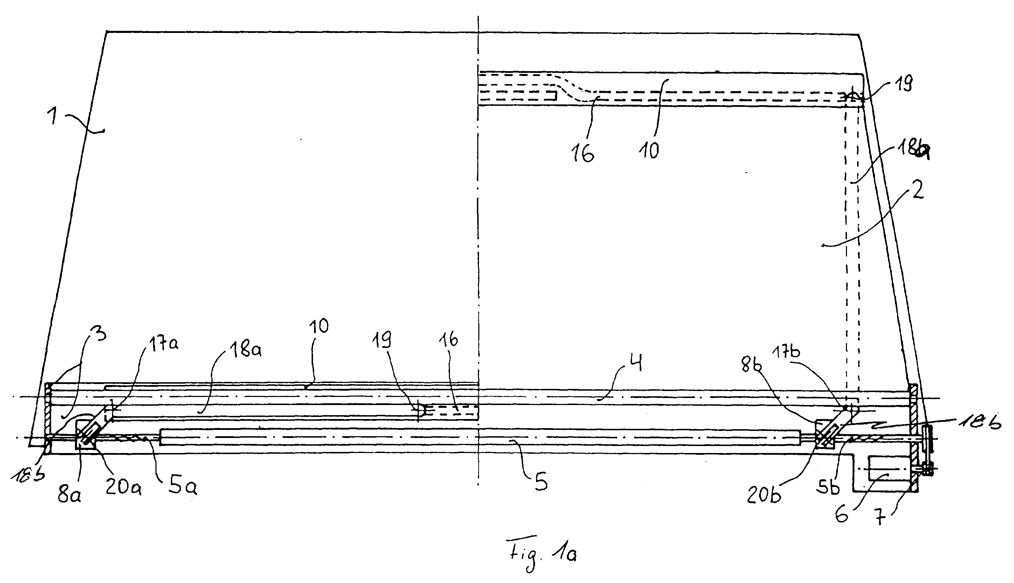

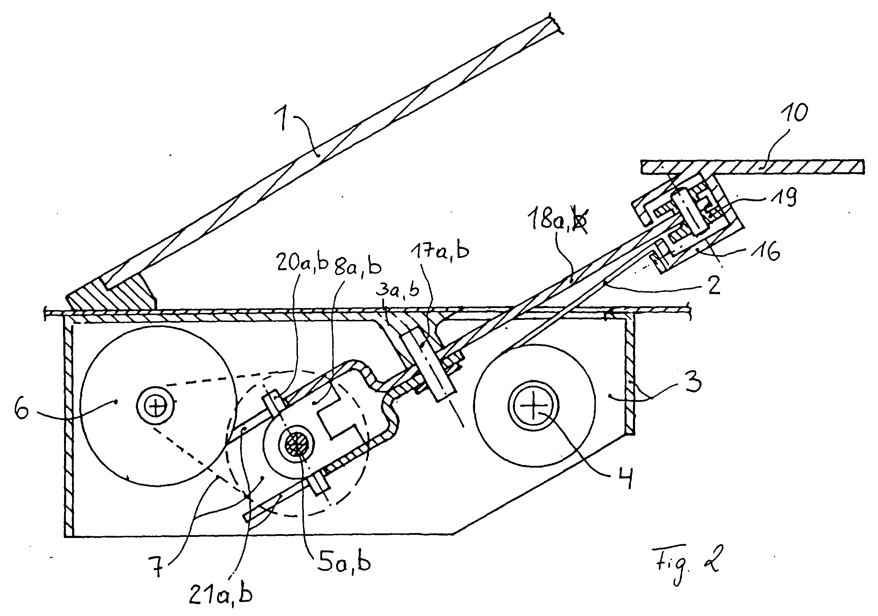

Die Fig. 5 zeigt ein drittes Ausführungsbeispiel der Erfindung. Antrieb und Führung der Spindel 5 sowie der langen und kurzen Armabschnitte 18a, 18b in der Rollokassette 3 entsprechen dem zweiten Ausführungsbeispiel, so daß an dieser Stelle auf die vorstehenden Textstellen verwiesen werden kann.

Der wesentliche Unterschied zu den beiden vorstehend beschriebenen Ausführungsbeispielen ist in der Anlenkung der Auszieharme 9a, 9b an die Zugleiste 10 zu sehen. Gemäß der Fig. 5 weist die Zugleiste 10 in diesem Beispiel zwei parallel zueinander angeordnete Führungsbahnen 26, 27 auf, an denen die freien Enden der langen Armabschnitte 18a schwenk- und verschiebbar gehalten sind. Konkreter ausgedrückt besteht jede Führungsbahn 26, 27 aus einem stegförmigen Vorsprung, an dessen vorderer Längskante eine Wulst ausgebildet ist. Auf der Wulst ist ein diese umgebender Läufer 28a, 28b gleitfähig gelagert, der ferner ein Scharnier ausbildet, an welchem der Auszieharm 9a, 9b endseitig angelenkt ist. Das Rollotuch 2 ist an einer Seitenfläche der Zugleiste 10 befestigt. Alternativ könnten natürlich auch gleichwirkende Nuten in der Zugleiste 10 ausgeformt sein, in denen Die Läufer gleit- oder kugelgelagert sind.

Durch die Anordnung zweier paralleler Führungsbahnen 26, 27 für eine maximale Ausziehlänge des Rollotuchs 2 ergibt sich eine geringfügig größere Breite der Zugleiste 10, wodurch beim Ausziehen des seitlich befestigten Rollotuchs 2 ein Kippmoment in Längsrichtung der Zugleiste 10 entsteht. Dieses Kippmoment ist natürlich auch bei Führungsleisten mit nur einer Führungsbahn beispielsweise gemäß dem ersten Ausführungsbeispiel vorhanden, wenngleich aufgrund der schmäleren Bauweise einer solchen Zugleiste nicht derart ausgeprägt.

Um dieses Kippmoment zu neutralisieren sind daher gemäß dem dritten Ausführungsbeispiel zwei Zugbänder 29 endseitig an der Zugleiste 10 gegenüber der Befestigungsseite des Rollotuchs 2 angeordnet, welche zusammen mit dem Rollotuch 2 von der Wickelwelle 4 abgewickelt werden und eine Gegenzugkraft erzeugen. Somit bleibt die Relativlage zwischen Zugleiste 10 und Auszieharme 9a, 9b stabil, wodurch ein Verkanten der Läufer 28a, 28b wirksam verhindert wird. Diese technische Maßnahme kann natürlich auch beim ersten und zweiten Ausführungsbeispiel vorgesehen werden.

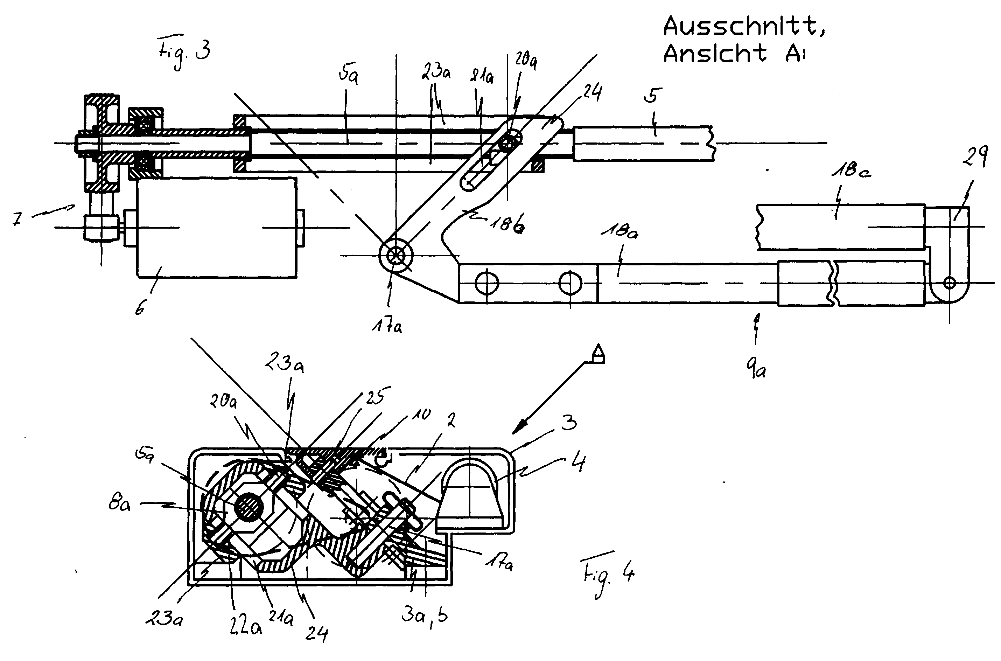

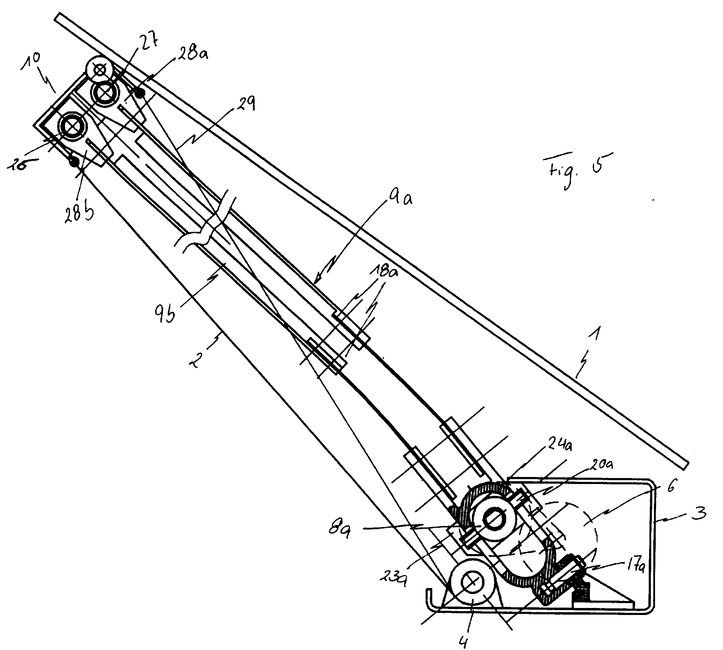

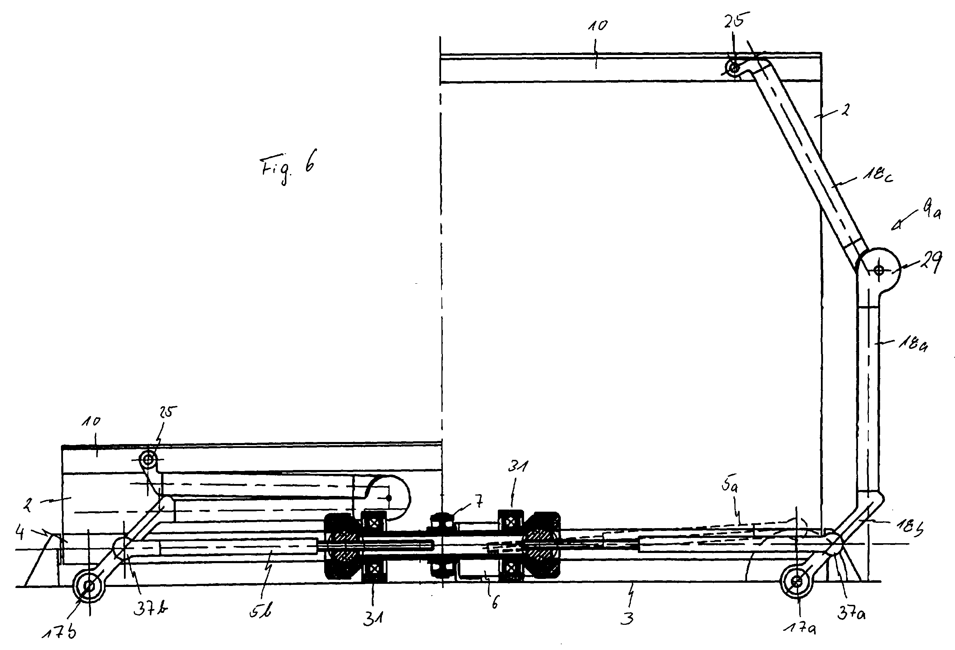

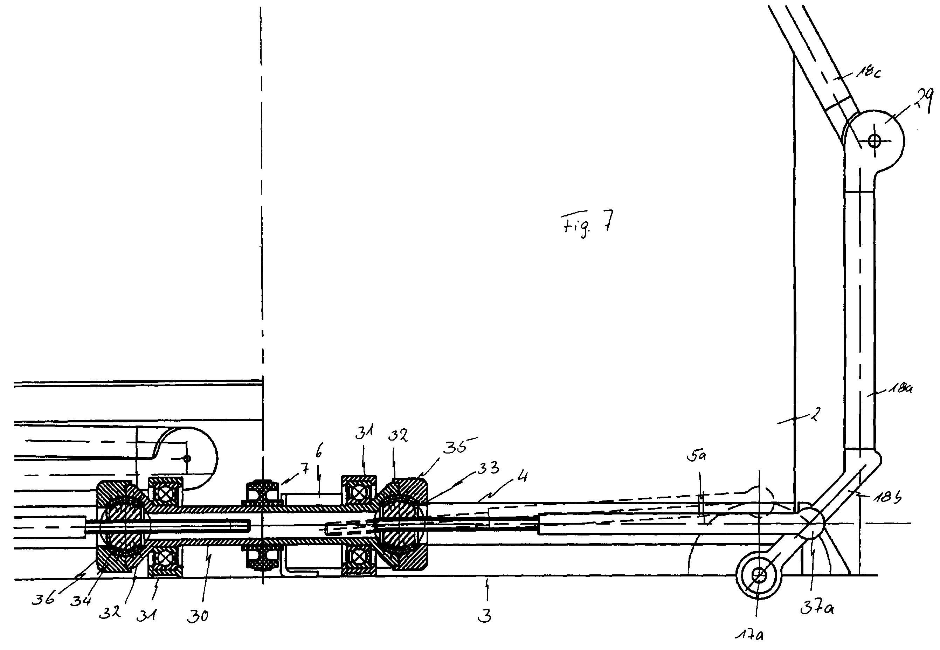

Schließlich wird nachstehend ein viertes Ausführungsbeispiel der Erfindung anhand der Fig. 6 und 7 beschrieben.

Gemäß dem vierten Ausführungsbeispiel treibt ein Motor 6 über ein Vorgelege 7 vorzugsweise in Form eines Riemengetriebes eine Hülse 30 an, welche drehbar, vorzugsweise per Kugellager 31 in der Rollokassette 3 gehalten ist. An den Stirnseiten der Hülse 30 bildet diese Innenschraubengewinde mit gegenläufiger Schraubung. Beispielsweise sind an die Stirnseiten der Hülse 30 Aufnahmen 32 angeformt, in denen Schraubenmuttern 33, 34 drehmomentfest jedoch allseits winkelbeweglich gelagert sind. Diese Lagerung besteht in dem gezeichneten Ausführungsbeispiel der Fig. 6 und Fig. 7 aus einem grundsätzlich bekannten Gleichlaufgelenk, dessen Außenring hier zur Erläuterung der Herstellung aus zwei axial geteilten Hälften 32 und 36 besteht und dessen Innenring 34 gleichzeitig als Schraubenmutter ausgebildet ist.

Anstelle der dargestellten Gleichlaufgelenke könnten auch Kardangelenke oder Gelenkscheiben in ebenfalls an sich bekannter Bauart angewendet werden.

In die Schraubenmuttern 32, 33 sind zwei Spindeln 5a, 5b eingedreht, welche sich somit abschnittsweise in die Hülse 30 erstrecken. Die freien Enden der Spindeln 5a, 5b bilden ein Kugelkopflager 37a, 37b, mit welchem die Spindeln 5a, 5b an Auszieharme 9a, 9b angelenkt sind. Die Auszieharme 9a, 9b bestehen jeweils aus einem kurzen Armabschnitt 18b, der zur Hülse 30 hin abgekröpft an ein langes Armunterteil 18a übergeht, dessen freies Ende ein Scharnier bildet. An dieses Scharnier ist ein langes Armoberteil 18c angelenkt an dessen freiem Ende ebenfalls ein Scharnier ausgebildet ist. Die kurzen Armabschnitte 18b sind an ihren unteren freien Enden drehbar an der Rollokassette 3 über Schwenkzapfen 17a, 17b angelenkt.

Wie aus der Fig. 6 ferner zu entnehmen ist, befindet sich der Anlenkpunkt jeder Spindel 5a, 5b an dem jeweiligen Auszieharm 9, 9b etwa in der Mitte des kurzen Armabschnitts 18b oberhalb des ortsfesten Anlenkpunkts mit der Rollokassette 3. An den oberen Scharnieren der Armoberteile 18c ist eine Zugleiste 10 parallel zu einer Wickelwelle 4 angelenkt. Insofern bilden die Auszieharme 9a, 9b einen Scherenmechanismus gleich dem zweiten Ausführungsbeispiel, welcher jedoch alternativ auch durch einen Mechanismus gemäß dem ersten oder dritten Ausführungsbeispiel ersetzt werden kann.

Die Funktionsweise des vierten Ausführungsbeispiels läßt sich wie folgt zusammenfassen:

Auf Erregung des Elektromotors 6 setzt dieser die Hülse 30 in eine Drehbewegung, welche über die Aufnahmen 32 auf die Schraubenmuttern 33, 34 übertragen wird. Hierdurch werden die Spindeln 5a, 5b je nach Drehrichtung der Hülse 30 aus der Hülse translatorisch nach außen bewegt oder in die Hülse 30 eingezogen. Dieser Mechanismus entspricht folglich kinematisch umgekehrt dem Spindelmechanismus gemäß der Ausführungsbeispiele eins bis drei.

Die translatorische Bewegung der Spindeln 5a, 5b wird auf die Auszieharme 9a, 9b übertragen, welche folglich um die ortsfesten Anlenkpunkte an der Rollokassette 3 verschwenkt werden. Durch dieses Verschwenken führen natürlich auch die Anlenkpunkte zwischen den Spindeln 5a, 5b und den Auszieharmen 9a, 9b eine Kreisbahnbewegung aus, wodurch die Spindeln 5a, 7b an den gelenkig gehaltenen Schraubenmuttern 33, 34 geringfügig geschwenkt werden.

## Patentansprüche

1. Elektromechanisch betätigtes Fensterrollo für Kraftfahrzeuge mit einer Wickelwelle (4), auf die ein Rollotuch (2) aufgewickelt ist, dessen eine Kante an einer Zugleiste (10) befestigt ist, deren Parallelabstand zur Wickelwelle (4) mittels Auszieharmen (9a, 9b) veränderbar ist, die über einen Spindelantrieb verschwenkbar sind,
**dadurch gekennzeichnet, daß**
die Auszieharme (9a, 9b) an ortsfesten Anlenkpunkten vorzugsweise über ein Rollogehäuse (3) mit dem Kraftfahrzeug verbunden sind, um welche die Auszieharme (9a, 9b) drehen und
die Angriffspunkte des Spindelantriebs an den Auszieharmen (9a, 9b) versetzt zu den Anlenkpunkten angeordnet sind, um eine Hebelwirkung zu erzeugen.

2. Fensterrollo nach Anspruch 1, dadurch gekennzeichnet, daß
achsparallel zur Wickelwelle (4) eine drehbar gelagerte Spindel (5) angeordnet ist, deren beide Enden mit gegenläufigen Gewinden (5a, 5b) versehen sind, wobei auf diesen Gewinden (5a, 5b) Stellmuttern (8a, 8b) so angeordnet sind, daß sie bei Drehung der Spindel (5) entgegengesetzte Längsbewegungen ausführen.

3. Fensterrollo nach Anspruch 2, dadurch gekennzeichnet, daß
ein Antriebsmotor (6) für das Antreiben der Spindel (5) vorgesehen ist, welcher im Bereich eines der Endabschnitte der Spindel (5) am Rollogehäuse (3) montiert ist und über ein Vorgelege (7) mit dem einen Endabschnitt der Spindel (5) wirkverbunden ist.

4. Fensterrollo nach Anspruch 2 oder 3, dadurch gekennzeichnet, daß an den Stellmuttern (8a, 8b) Lagerzapfen (20a, 20b) angeordnet sind, deren Achse senkrecht zur Achse der Spindel (5) verläuft und etwa senkrecht zu einer Ebene steht, die durch die Eckpunkte einer Fensterscheibe (1) definiert ist.

5. Fensterrollo nach Anspruch 4, dadurch gekennzeichnet, daß die Lagerzapfen (20a, 20b) der Stellmuttern (8a, 8b) drehbar mit den Auszieharmen verbunden sind und, daß die Auszieharme an ihrem anderen Ende mit der Zugleiste 10 gelenkig verbunden sind.

6. Fensterrollo nach Anspruch 1-5, dadurch gekennzeichnet, daß am Rollogehäuse (3) Lagerstellen (17a, 17b) vorgesehen sind, an denen die Auszieharme (9a, 9b) drehbar gelagert sind und welche die Anlenkpunkte mit dem Kraftfahrzeug bilden.

7. Fensterrollo nach Anspruch 6, dadurch gekennzeichnet, daß die Auszieharme (9a, 9b) je einen kürzeren Armabschnitt (18b) haben, der ein Langloch (21a, 21b) aufweist, mit dem der Lagerzapfen (20a, 20b) der Stellmuttern (8a, 8b) umschlossen wird.

8. Fensterrollo nach Anspruch 6, dadurch gekennzeichnet, daß die Auszieharme (9a, 9b) je einen längeren Armabschnitt (18a) haben, an dessen Ende sich eine Rolle oder Läufer (19) befindet, die in eine Führungsnut (16) der Zugleiste (10) derart eingreift, daß sie und damit die Auszieharme (9a, 9b) in Längsrichtung der Zugleiste (10) verschieblich sind.

9. Fensterrollo nach Anspruch 8, dadurch gekennzeichnet, daß in der Nut (16) der Zugleiste (10) Anschläge eingebaut sind, die den Weg der Auszieharme (9a, 9b) begrenzen.

10. Fensterrollo nach Anspruch 6, dadurch gekennzeichnet, daß die Auszieharme (9a, 9b) je einen kürzeren Armabschnitt (18b) haben, der über ein Kugelgelenk mit den Gewindespindeln (5a, 5b) in Wirkverbindung steht, die an ihren anderen Enden mit Muttern (34) in Verbindung sind, welche gelenkig aber verdrehfest mit einer Hohlwelle (30) verbunden sind, die von einem Motor (6) über ein Vorgelege (7) angetrieben wird.
